# EUROPEAN PATENT APPLICATION

(11) **EP 3 232 238 A1**
(43) Date of publication of application: **18.10.2017**
(21) Application number: 15867430.9
(22) Date of filing: 09.12.2015
(51) Int. Cl.: G02B 5/30, B32B 7/02, B32B 27/30, C09J 7/02, C09J 129/14, G06F 3/041

(54) **POLARIZING PLATE WITH TRANSPARENT ADHESIVE, AND TOUCH PANEL**

(30) Priority: 10.12.2014 JP 2014250389
(71) Applicant: Sekisui Chemical Co., Ltd., Osaka-shi, Osaka 530-0047 (JP)
(72) Inventor: OKABAYASHI Takazumi, Osaka 618-0021 (JP); FUKATANI Juichi, Osaka 618-0021 (JP); EBINA Ryousuke, Osaka 618-0021 (JP)
(74) Representative: Hart-Davis, Jason
(86) International application number: PCT/JP2015/084543
(87) International publication number: WO 2016/093280

(57) **Abstract**

The present invention aims to provide a polarizing plate with a transparent adhesive which is incorporated in a touch panel used in a personal digital assistant or the like, which is less likely to cause adhesive deposits on a punching blade during a punching process, and which is also less likely to have bubbles formed on an adhering surface of the transparent adhesive to the polarizing plate even with exposure to high temperature and high humidity. The present invention also aims to provide a touch panel incorporating the polarizing plate with a transparent adhesive. The present invention relates to a polarizing plate with a transparent adhesive, including: a polarizing plate; and a transparent adhesive containing a plasticized polyvinyl acetal resin and adhering to the polarizing plate, the polarizing plate having a contact angle with water in conformity with JIS R-3257 of less than 50° on a surface to which the transparent adhesive adheres.

## Description

### TECHNICAL FIELD

The present invention relates to a polarizing plate with a transparent adhesive which is incorporated in a touch panel used in a personal digital assistant or the like, which is in particular less likely to cause adhesive deposits on a punching blade during a punching process, and which is also less likely to have bubbles formed on an adhering surface of the transparent adhesive to the polarizing plate even with exposure to high temperature and high humidity. The present invention also relates to a touch panel incorporating the polarizing plate with a transparent adhesive.

### BACKGROUND ART

Touch panels are used in various fields. For example, personal digital assistants such as smartphones and tablet PCs incorporate a touch panel. A commonly used out-cell touch panel includes a surface protection panel made of glass or the like, a film with touch panel wiring made of tin indium oxide (ITO) or the like, a polarizing plate, and a display, in the stated order from the top.

In order to improve the transparency, luminance, and contrast of a display screen of the personal digital assistant for better visibility, an interlayer space between the surface protection panel and the film with touch panel wiring and an interlayer space between the film with touch panel wiring and the polarizing plate are filled with a transparent adhesive that has a smaller refractive index than air to reduce the difference in the refractive index between these members and the interlayer spaces.

The transparent adhesive often used is an acrylic adhesive or an acrylic adhesive tape from the standpoint of transparency, adhesiveness, and applicability (see Patent Literature 1, for example).

For providing a thinner and higher-performance personal digital assistant, a new touch panel structure has recently attracted attention to replace the out-cell structure.

For example, in a cover glass-integrated (i.e., one glass solution (OGS)) type or cover sheet-integrated type touch panel, a glass plate or a resin film (e.g., a polyester film) as a surface protection panel is provided with touch panel wiring. In an on-cell or in-cell type touch panel, touch panel wiring is formed inside the display so that the display has a touch panel function.

Even in such a new touch panel structure, an acrylic adhesive or an acrylic adhesive tape as disclosed in Patent Literature 1 is used to bond the polarizing plate.

In the case of using the acrylic adhesive or acrylic adhesive tape as disclosed in Patent Literature 1, however, the acrylic adhesive sticks to a punching blade (adhesive deposits) during a punching process for punching the acrylic adhesive or acrylic adhesive tape in the shape of a touch panel, which requires additional time for washing the punching blade.

### CITATION LIST

### - Patent Literature

Patent Literature 1: JP 2011-74308 A

### SUMMARY OF INVENTION

### - Technical Problem

The present inventors made an intensive study to find out that the above situation can be overcome by using, instead of an adhesive that is tacky at normal temperature like an acrylic adhesive, a plasticized polyvinyl acetal resin that is less tacky at normal temperature to avoid adhesive deposits. A transparent adhesive containing a plasticized polyvinyl acetal resin can exhibit adhesiveness to a polarizing plate when pressure bonded to the polarizing plate with heat, and is less likely to cause adhesive deposits on a punching blade during a punching process at normal temperature.

In the case of using a transparent adhesive containing a plasticized polyvinyl acetal resin, however, bubbles may be formed on the adhering surface of the transparent adhesive to the polarizing plate with exposure to high temperature and high humidity due to, for example, outgassing from the polarizing plate, leading to poor visibility. Such a phenomenon occurs even when an acrylic adhesive is used. However, the phenomenon is more remarkable when a plasticized polyvinyl acetal resin is used.

The present invention aims to provide a polarizing plate with a transparent adhesive which is incorporated in a touch panel used in a personal digital assistant or the like, which is less likely to cause adhesive deposits on a punching blade during a punching process, and which is also less likely to have bubbles formed on an adhering surface of the transparent adhesive to the polarizing plate even with exposure to high temperature and high humidity. The present invention also aims to provide a touch panel incorporating the polarizing plate with a transparent adhesive.

### - Solution to problem

The present invention relates to a polarizing plate with a transparent adhesive, including: a polarizing plate; and a transparent adhesive containing a plasticized polyvinyl acetal resin and adhering to the polarizing plate, the polarizing plate having a contact angle with water in conformity with JIS R-3257 of less than 50° on a surface to which the transparent adhesive adheres.

The present invention is specifically described in the following.

As a result of the intensive study to overcome the above situation, the present inventors found out that the use of a transparent adhesive containing a plasticized polyvinyl acetal resin and adjustment of the contact angle with water in conformity with JIS R-3257 within a specific range on a surface to which the transparent adhesive adheres of the polarizing plate can prevent adhesive deposits on a punching blade during a punching process and suppresses formation of bubbles on the adhering surface of the transparent adhesive to the polarizing plate with exposure to high temperature and high humidity. The present invention was thus completed.

The polarizing plate with a transparent adhesive of the present invention is a polarizing plate including: a polarizing plate; and a transparent adhesive containing a plasticized polyvinyl acetal resin and adhering to the polarizing plate. The plasticized polyvinyl acetal resin as used herein refers to a resin containing a polyvinyl acetal and a plasticizer.

The polyvinyl acetal can be prepared, for example, by saponifying polyvinyl acetate to prepare a polyvinyl alcohol and then acetalizing the polyvinyl alcohol with an aldehyde in the presence of a catalyst. The polyvinyl alcohol may have any degree of saponification. The degree of saponification is commonly in a range of 70 to 99.9 mol%, preferably in a range of 70 to 99.8 mol%, more preferably in a range of 80 to 99.8 mol%.

The polyvinyl alcohol may have any average degree of polymerization. Preferably, the polyvinyl alcohol used has a high average degree of polymerization because a polyvinyl acetal having a large molecular weight is suitably used from the standpoint of suppressing formation of bubbles on the adhering surface of the transparent adhesive to the polarizing plate with exposure to high temperature and high humidity. The lower limit of the average degree of polymerization of the polyvinyl alcohol is preferably 200, and the upper limit thereof is preferably 4,000. When the average degree of polymerization is less than 200, bubbles tend to be formed on the adhering surface of the transparent adhesive to the polarizing plate. When the average degree of polymerization is more than 4,000, the viscosity of the polyvinyl alcohol solution used in acetalization thereof may become abnormally high so that the polyvinyl alcohol is hardly acetalized. Also, the transparent adhesive may be hardly molded. The lower limit of the average degree of polymerization is more preferably 600, and the upper limit thereof is more preferably 3,800. The lower limit is still more preferably 800, and the upper limit is still more preferably 3,600.

For acetalization of the polyvinyl alcohol with an aldehyde in the presence of a catalyst, a solution containing the polyvinyl alcohol may be used. The solvent of the solution containing the polyvinyl alcohol may be, for example, water.

The aldehyde is not particularly limited. Commonly, a C1-C10 aldehyde is suitably used.

Any C1-C10 aldehyde may be used, and it may be a linear or branched aldehyde. Examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. In particular, preferred are n-butyraldehyde, n-hexylaldehyde, and n-valeraldehyde, and more preferred is n-butyraldehyde. These aldehydes may be used alone, or in combination of two or more thereof.

In other words, the polyvinyl acetal is preferably polyvinyl butyral (when the aldehyde is n-butyraldehyde, the polyvinyl acetal is referred to as polyvinyl butyral (PVB)). The use of the polyvinyl butyral enables appropriate exhibition of adhesion of the transparent adhesive to the polarizing plate, leading to improvement in the light resistance, weather resistance, or the like. If necessary, two or more types of polyvinyl acetals may be used in combination.

The lower limit of the content ratio of hydroxy groups (hydroxy group content) in the polyvinyl acetal is preferably 16 mol%, and the upper limit thereof is preferably 45 mol%. When the hydroxy group content is 16 mol% or higher, the adhesion of the transparent adhesive to the polarizing plate is enhanced. When the hydroxy group content is 45 mol% or lower, the polyvinyl acetal has higher flexibility to have better handleability. In addition, the compatibility between the polyvinyl acetal and the plasticizer is increased to improve the followability to steps of the transparent adhesive. The lower limit of the hydroxy group content is more preferably 18 mol%, still more preferably 20 mol%, particularly preferably 22 mol%. The upper limit thereof is more preferably 40 mol%, still more preferably 38 mol%, further more preferably 36 mol%, particularly preferably 35 mol%.

The hydroxy group content of the polyvinyl acetal is a value in percentage of the mole fraction (mol%) obtained by dividing the amount of ethylene groups to which hydroxy groups are bonded by the total amount of ethylene groups of the main chain. The amount of ethylene groups to which hydroxy groups are bonded can be determined, for example, by a method in conformity with JIS K6728 "Testing methods for polyvinyl butyral".

The lower limit of the degree of acetylation (acetyl group content) of the polyvinyl acetal is preferably 0.1 mol%, and the upper limit thereof is preferably 30 mol%. When the acetyl group content is 0.1 mol% or higher, the compatibility between the polyvinyl acetal and the plasticizer is increased to improve the followability to steps of the transparent adhesive. When the acetyl group content is 30 mol% or lower, the moisture resistance of the polyvinyl acetal is improved. When the acetyl group content is higher than 30 mol%, the reaction efficiency in production of the polyvinyl acetal may be lowered. The lower limit of the acetyl group content is more preferably 0.2 mol%, still more preferably 0.3 mol%. The upper limit thereof is more preferably 24 mol%, still more preferably 20 mol%, further more preferably 19.5 mol%, particularly preferably 15 mol%.

The acetyl group content of the polyvinyl acetal is a value in percentage of the mole fraction (mol%) obtained by subtracting the amount of ethylene groups to which acetal groups are bonded and the amount of ethylene groups to which hydroxy groups are bonded from the total amount of ethylene groups of the main chain and then dividing the resulting value by the total amount of ethylene groups of the main chain. The amount of ethylene groups to which acetal groups are bonded can be determined, for example, by a method in conformity with JIS K6728 "Testing methods for polyvinyl butyral".

The acetyl group content of the polyvinyl acetal is adjusted within the above range, for example, by a method of adjusting the degree of saponification of the polyvinyl alcohol. In other words, the acetyl group content of the polyvinyl acetal depends on the degree of saponification of the polyvinyl alcohol. When the polyvinyl alcohol used has a low degree of saponification, the acetyl group content of the polyvinyl acetal is large, while when the polyvinyl alcohol used has a high degree of saponification, the acetyl group content of the polyvinyl acetal is small.

The lower limit of the degree of acetalization of the polyvinyl acetal is preferably 50 mol%, and the upper limit thereof is preferably 85 mol%. When the degree of acetalization is 50 mol% or higher, the compatibility between the polyvinyl acetal and the plasticizer is increased. When the degree of acetalization is 85 mol% or lower, the reaction time needed for production of the polyvinyl acetal can be shortened. The lower limit of the degree of acetalization is more preferably 54 mol%, still more preferably 58 mol%, particularly preferably 60 mol%. The upper limit of the degree of acetalization is more preferably 82 mol%, still more preferably 79 mol%, particularly preferably 77 mol%.

The degree of acetalization of the polyvinyl acetal is a value in percentage of the mole fraction (mol%) obtained by dividing the amount of ethylene groups to which acetal groups are bonded by the total amount of ethylene groups of the main chain. The degree of acetalization can be calculated by determining the acetyl group content and the vinyl alcohol content (content ratio of hydroxy groups) by a method in conformity with JIS K6728 "Testing methods for polyvinyl butyral", calculating the mole fractions based on the obtained values, and subtracting the acetyl group content and the vinyl alcohol content from 100 mol%.

The degree of acetalization of the polyvinyl acetal is adjusted, for example, by adjusting the amount of the added aldehyde. When the amount of the added aldehyde is reduced, the degree of acetalization of the polyvinyl acetal becomes lower. When the amount of the added aldehyde is increased, the degree of acetalization of the polyvinyl acetal becomes higher.

The plasticizer is not limited, and a conventionally known plasticizer may be used. One plasticizer may be used alone, or two or more plasticizers may be used in combination. Examples of the plasticizer include organic acid ester plasticizers such as monobasic organic acid esters and polybasic organic acid esters and phosphoric acid plasticizers such as organophosphate plasticizers and organophosphite plasticizers. Preferred among these are organic acid ester plasticizers.

The plasticizer is preferably a liquid plasticizer.

The monobasic organic acid ester is not limited, and may be a glycol ester prepared by a reaction between a monobasic organic acid (e.g., butyric acid, isobutyric acid, caproic acid, 2-ethylbutyric acid, hepthylic acid, n-octylic acid, 2-ethylhexylic acid, pelargonic acid (n-nonylic acid), decanoic acid) and a glycol (e.g., triethylene glycol, tetraethylene glycol, tripropylene glycol).

The polybasic organic acid ester is not limited, and may be an ester compound prepared by a reaction between a polybasic organic acid (e.g., adipic acid, sebacic acid, azelaic acid) and a C4-C8 linear or branched alcohol.

The organic acid ester plasticizer is preferably a diester plasticizer represented by the formula below. The use of the diester plasticizer improves the moldability of the transparent adhesive.

R¹-CO-(-R³-O-)ₚ-CO-R²

In the formula, R¹ and R² each represent a C5-C10 (preferably C6-C10) organic group, R³ represents an ethylene, isopropylene, or n-propylene group, and p represents an integer of 3 to 10.

Specific examples of the organic acid ester plasticizer include triethylene glycol-di-2-ethylbutyrate, triethylene glycol-di-2-ethylhexanoate, triethylene glycol dicaprylate, triethylene glycol-di-n-octanoate, triethylene glycol-di-n-heptanoate, tetraethylene glycol-di-n-heptanoate, tetraethylene glycol-di-2-ethylhexanoate, dibutyl sebacate, dioctyl azelate, dibutyl carbitol adipate, ethylene glycol-di-2-ethyl butyrate, 1,3-propylene glycol-di-2-ethylbutyrate, 1,4-butylene glycol-di-2-ethylbutyrate, diethylene glycol-di-2-ethyl butyrate, diethylene glycol-di-2-ethylhexanoate, dipropylene glycol-di-2-ethylbutyrate, triethylene glycol-di-2-ethylpentanoate, tetraethylene glycol-di-2-ethylbutyrate, diethylene glycol dicaprylate, dihexyl adipate, dioctyl adipate, hexyl cyclohexyl adipate, diisononyl adipate, heptylnonyl adipate, oil-modified sebacic alkyds, mixtures of phosphoric acid esters and adipic acid esters, mixed-type adipic acid esters prepared using C4-C9 alkyl alcohols and C4-C9 cyclic alcohols.

The organophosphate plasticizer is not limited, and examples thereof include tributoxyethyl phosphate, isodecyl phenyl phosphate, and triisopropyl phosphate.

Among the plasticizers, preferred is at least one selected from the group consisting of dihexyl adipate (DHA), triethylene glycol-di-2-ethylhexanoate (3GO), tetraethylene glycol-di-2-ethylhexanoate (4GO), triethylene glycol-di-2-ethylbutyrate (3GH), tetraethylene glycol-di-2-ethylbutyrate (4GH), tetraethylene glycol-di-n-heptanoate (4G7), and triethylene glycol-di-n-heptanoate (3G7). More preferred is triethylene glycol-di-2-ethyl butyrate (3GH), triethylene glycol-di-n-heptanoate (3G7), or triethylene glycol-di-2-ethylhexanoate (3GO). Still more preferred is triethylene glycol-di-2-ethylhexanoate (3GO).

The amount of the plasticizer relative to the amount of the polyvinyl acetal is not limited. The lower limit thereof is preferably 5 parts by weight and the upper limit thereof is preferably 75 parts by weight relative to 100 parts by weight of the polyvinyl acetal. When the amount is less than 5 parts by weight, the moldability of the transparent adhesive may be lowered. When the amount is more than 75 parts by weight, the transparency of the transparent adhesive may be lowered or the plasticizer may bleed out. The lower limit of the amount of the plasticizer is more preferably 10 parts by weight, still more preferably 15 parts by weight, particularly preferably 20 parts by weight. The upper limit thereof is more preferably 65 parts by weight, still more preferably 55 parts by weight, particularly preferably 45 parts by weight.

Since the cohesion force is generated by the polyvinyl acetal, the amount of the plasticizer is preferably small. In other words, the compatibility between the polyvinyl acetal and the plasticizer is preferably increased to reduce the amount of the plasticizer. This further prevents formation of bubbles on the adhering surface of the transparent adhesive to the polarizing plate with exposure to high temperature and high humidity.

For example, the compatibility between the polyvinyl acetal and the plasticizer is increased preferably by a method of increasing the degree of acetalization of the polyvinyl acetal or increasing the acetyl group content. The compatibility is also preferably increased by lowering the blocking properties of hydroxy groups of the polyvinyl acetal. Blocking of hydroxy groups is preferably suppressed by lowering the maturing temperature.

The amount of the plasticized polyvinyl acetal resin in the transparent adhesive is preferably 50% by weight or more. When the amount is less than 50% by weight, adhesive deposits on a punching blade during a punching process may not be suppressed and formation of bubbles on the adhering surface of the transparent adhesive to the polarizing plate with exposure to high temperature and high humidity may not be suppressed. The lower limit of the amount is more preferably 60% by weight, still more preferably 70% by weight, furthermore preferably 80% by weight, particularly preferably 90% by weight.

The upper limit of the amount of the plasticized polyvinyl acetal resin is not limited, and may be 100% by weight.

The transparent adhesive may optionally contain known additives within a range that the transparency of the transparent adhesive is not lowered. Examples of the additives include adhesion modifiers, tackifier resins, plasticizers, emulsifiers, softeners, fine particles, fillers, pigments, dyes, silane coupling agents, antioxidants, surfactants, and waxes.

The transparent adhesive may have any shape, and it may be a sheet, a film, or a liquid (dispersion, emulsion). Preferably, the transparent adhesive is a sheet.

In the case of a sheet-shaped transparent adhesive, the thickness thereof is not limited. The thickness may be determined according to the application. The lower limit of the thickness is preferably 5 µm, and the upper limit thereof is preferably 800 µm. When the thickness is less than 5 µm, bubbles may be entrapped when the transparent adhesive and the polarizing plate are bonded to each other. The lower limit of the thickness is more preferably 10 µm, and the upper limit thereof is more preferably 600 µm. The lower limit is still more preferably 25 µm, and the upper limit is still more preferably 400 µm. The lower limit is further more preferably 50 µm, and the upper limit is further more preferably 300 µm. The lower limit is particularly preferably 75 µm, and the upper limit is particularly preferably 200 µm.

The transparent adhesive needs to have a transparency required for a touch panel used in a personal digital assistant or the like. Preferably, the transparent adhesive has a total light transmittance of 70% or higher.

The transparent adhesive may be produced by any method. In the case of a sheet-shaped transparent adhesive, for example, a composition containing a plasticized polyvinyl acetal resin and additives used according to needs is formed into a sheet by a common sheet-forming method such as extrusion, application, casting, calendering, or pressing.

The polarizing plate has a contact angle with water in conformity with JIS R-3257 of less than 50° on a surface to which the transparent adhesive adheres.

By setting the contact angle with water of less than 50°, formation of bubbles on the adhering surface of the transparent adhesive to the polarizing plate with exposure to high temperature and high humidity can be suppressed. The upper limit of the contact angle with water is preferably 40°, more preferably 30°, still more preferably 25°, particularly preferably 20°, most preferably 15°.

The lower limit of the contact angle with water is not limited, and is preferably 1° or more, more preferably 5° or more.

The contact angle with water in conformity with JIS R-3257 on the surface to which the transparent adhesive adheres of the polarizing plate can be measured in conformity with JIS R-3257 using a contact angle measurement device (e.g., "CAM200" from KSV Instruments Ltd.).

The polarizing plate is not limited as long as it has a contact angle within the above range. Examples thereof include a polarizing plate or a polarizing film produced by bonding transparent films made of triacetylcellulose (TAC) or the like as protection films to both surfaces of a polyvinyl alcohol layer that is prepared by stretching a polyvinyl alcohol film and dyeing the stretched film with iodine or a dichroic dye. In a case where the required durability is not so high, the polarizing plate may be an iodine-type polarizing film dyed with iodine that has high polarization performance. In a case where the required durability is high, the polarizing plate may be a dye-type polarizing film dyed with a dichroic dye that is relatively low in the polarization performance but excellent in durability.

On the protection film, a surface coating layer may be further formed. Examples of the surface coating layer include a hard coat layer made of urethane acrylate or the like.

For adjustment of the contact angle within the above range, the surface to which the transparent adhesive adheres of the polarizing plate may be preliminarily subjected to surface modification treatment.

The surface modification treatment may be performed by any method, and examples thereof include plasma treatment, corona treatment, irradiation with UV ozone, hydrophilic silane coupling treatment, vapor deposition or sputtering using a metal oxide, and chemical etching. Since the treatment is performed easily, preferred are plasma treatment, corona treatment, and irradiation with UV ozone, and more preferred are plasma treatment and corona treatment.

The plasma treatment may be performed by any method, and for example, performed using an atmospheric pressure plasma treatment device (e.g., AP-T01 from Sekisui Chemical Co., Ltd.) under the conditions of an oxygen concentration of 500 to 1,000 ppm and a treatment rate of 0.1 to 1.5 m/min. The corona treatment may be performed by any method, and for example, performed using a high frequency power source of a corona treatment device (e.g., AGI020 from Kasuga Electric Works Ltd.) under the condition of a treatment rate of 0.1 to 1 m/min.

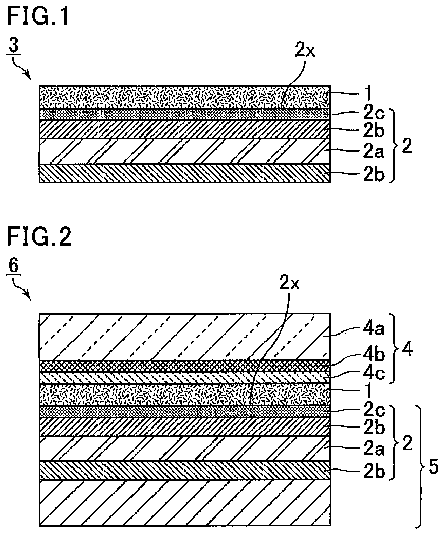

Fig. 1 is a cross-sectional view schematically illustrating an exemplary polarizing plate with a transparent adhesive of the present invention. In a polarizing plate with a transparent adhesive 3 illustrated in Fig. 1, a transparent adhesive 1 adheres to a surface of a polarizing plate 2, and the surface 2x to which the transparent adhesive 1 adheres of the polarizing plate 2 has a contact angle with water in conformity with JIS R-3257 adjusted within the above-described range.

In the polarizing plate 2 illustrated in Fig. 1, protection films 2b are bonded to both surfaces of a polyvinyl alcohol layer 2a, and a hard coat layer 2c is further formed on each protection film 2b. It is to be noted that the polarizing plate with a transparent adhesive of the present invention is not limited to have such a structure.

The polarizing plate with a transparent adhesive of the present invention may be produced by any method. For example, the transparent adhesive and the polarizing plate are stacked on each other and heated at around 70°C to 85°C, so that the transparent adhesive easily adheres to the surface of the polarizing plate. Alternatively, the transparent adhesive and the polarizing plate may be stacked on each other at normal pressure and then subjected to autoclave (ACV) treatment in which pressurization and heating are concurrently performed.

Entrapment of bubbles upon bonding of the transparent adhesive and the polarizing plate can be suppressed by the following process. The transparent adhesive and the polarizing plate are stacked on each other, and heated at around 85°C so that the transparent adhesive adheres to the surface of the polarizing plate. They are then preliminarily pressure-bonded with heating in a vacuum laminator, for example, at 1 atm and 70°C for 30 minutes, and subjected to autoclave (ACV) treatment at 70°C for 30 minutes in which heating and pressurization are concurrently carried out.

The polarizing plate with a transparent adhesive of the present invention is preferably incorporated in a touch panel used in a personal digital assistant or the like.

The touch panel incorporating the polarizing plate with a transparent adhesive of the present invention may have any structure as long as the transparent adhesive is stacked on a polarizing plate. Examples of the structure include the out-cell type, cover glass-integrated (i.e., one glass solution (OGS)) type, cover sheet-integrated type, on-cell type, and in-cell type structures. The system of the touch panel incorporating the polarizing plate with a transparent adhesive of the present invention is not limited, and may be a system commonly used for a personal digital assistant, a flat-type or flexible image display device, or the like, such as resistive film-type, electrostatic-type, optical type, ultrasonic type, and acoustic pulse recognition-type systems.

In the out-cell type touch panel, a film on which touch panel wiring made of indium tin oxide (ITO) or the like is formed is provided below a surface protection panel. Below the film with touch panel wiring, a polarizing plate and a display are provided in the stated order. The surface protection panel is not limited, and may be one commonly used for a personal digital assistant, a flat-type or flexible image display device, such as a glass plate or a resin plate (e.g., a polycarbonate plate, an acrylic plate).

In the cover glass-integrated (i.e., one glass solution (OGS)) type or cover sheet-integrated type touch panel, touch panel wiring is formed on a glass plate or a resin film (e.g., a polyester film) used as a surface protection panel. Below the glass plate or resin film with touch panel wiring, a polarizing plate and a display are provided in the stated order.

On the touch panel wiring of the glass plate or resin film with touch panel wiring, for example, a hard coat layer made of urethane acrylate may be further formed.

In the on-cell type or in-cell type touch panel, touch panel wiring is formed inside the display so that the display has a touch panel function. Below the surface protection panel, a polarizing plate and a display having a touch panel function are provided in the stated order. The surface protection panel is not limited, and may be one commonly used for a personal digital assistant, a flat-type or flexible image display device, or the like, such as a glass plate or a resin plate (e.g., a polycarbonate plate, an acrylic plate).

The present invention also encompasses a touch panel including: at least one adherend selected from the group consisting of a glass plate, a resin plate, a resin film, a glass plate with touch panel wiring, and a resin film with touch panel wiring; and the polarizing plate with a transparent adhesive of the present invention, the adherend and the polarizing plate being stacked on each other through the transparent adhesive.

In the touch panel of the present invention, the contact angle with water in conformity with JIS R-3257 on the surface to which the transparent adhesive adheres of the adherend may be adjusted in the same manner as in the case of the polarizing plate. For adjustment of the contact angle, the surface to which the transparent adhesive adheres of the adherend may be preliminarily subjected to surface modification treatment. This can suppress formation of bubbles not only on the adhering surface of the transparent adhesive to the polarizing plate but also on the adhering surface of the transparent adhesive to the adherend with exposure to high temperature and high humidity.

Fig. 2 is a cross-sectional view schematically illustrating an exemplary touch panel of the present invention.

A touch panel 6 illustrated in Fig. 2 is a cover glass-integrated (i.e., one glass solution (OGS)) type touch panel. In the touch panel 6 illustrated in Fig. 2, below a glass plate with touch panel wiring 4, a polarizing plate 2 and a display are provided in the stated order (Fig. 2 shows a liquid crystal display module 5 including a polarizing plate 2 and a display). The glass plate with touch panel wiring 4 and the polarizing plate 2 are stacked on each other through a transparent adhesive 1.

In the glass plate with touch panel wiring 4 illustrated in Fig. 2, touch panel wiring 4b is formed on a glass plate 4a, and a hard coat layer 4c is further formed on the touch panel wiring 4b.

The touch panel of the present invention may be used for any application, and may be used, for example, in a personal digital assistant (e.g., a smartphone, a tablet PC) or a flat-type or flexible image display device including an image display panel such as a LCD, an EL, or a PDP (e.g., electric paper, a PDA, a TV, a game machine).

### - Advantageous Effects of Invention

The present invention can provide a polarizing plate with a transparent adhesive which is incorporated in a touch panel used in a personal digital assistant or the like, which is less likely to cause adhesive deposits on a punching blade during a punching process, and which is also less likely to have bubbles formed on an adhering surface of the transparent adhesive to the polarizing plate even with exposure to high temperature and high humidity. The present invention can also provide a touch panel incorporating the polarizing plate with a transparent adhesive.

### BRIEF DESCRIPTION OF DRAWINGS

Fig. 1 is a cross-sectional view schematically illustrating an exemplary polarizing plate with a transparent adhesive of the present invention.
Fig. 2 is a cross-sectional view schematically illustrating an exemplary touch panel of the present invention.

### DESCRIPTION OF EMBODIMENTS

The present invention is specifically described in the following with reference to, but not limited to, examples.

### (Production of polyvinyl butyral resin (1))

To a reactor equipped with a stirrer were charged 2700 mL of ion exchange water and 300 g of a polyvinyl alcohol having an average degree of polymerization of 1800 and a degree of saponification of 99.3 mol%. The mixture was stirred to be dissolved with heating, thereby preparing a solution. To the solution was added 35% by weight hydrochloric acid as a catalyst such that the hydrochloric acid concentration became 0.2% by weight. After adjustment of its temperature to 15°C, the mixture was blended with 21 g of n-butyraldehyde (n-BA) with stirring. Then, 145 g of n-butyraldehyde (n-BA) was further added, and a polyvinyl butyral resin in the form of white particles was precipitated. Fifteen minutes after the precipitation, 35% by weight hydrochloric acid was added such that the hydrochloric acid concentration became 1.8% by weight. The mixture was heated to 50°C and matured at 50°C for two hours. The solution was then cooled and neutralized. The polyvinyl butyral resin was washed with water and dried to give a polyvinyl butyral resin (1). The polyvinyl butyral resin (1) had a hydroxy group content of 31.0 mol%, an acetyl group content of 0.7 mol%, and a degree of butyralization (Bu degree) of 68.3 mol%.

### (Production of polyvinyl butyral resins (2) and (3))

Polyvinyl butyral resins (2) and (3) were produced in accordance with the formulations and conditions specified in Table 1 in the same manner as in the case of the polyvinyl butyral resin (1).

### (Examples 1 to 25, Comparative Examples 1 to 8)

### (1) Production of transparent adhesive

The following film formation was performed using the obtained polyvinyl butyral resins (1) to (3) in accordance with the composition of plasticized polyvinyl acetal resins specified in Table 2.

An amount of 100 parts by weight of the obtained polyvinyl butyral resin (having a degree of butyralization (Bu degree), a hydroxy group content, and an acetyl group content shown in Table 1) was blended with triethylene glycol-di-2-ethylhexanoate (3GO) as a plasticizer in an amount as shown in Table 2. The mixture was sufficiently kneaded to give a kneaded mass. The obtained kneaded mass was press-formed into a sheet shape using a press-molding machine, thereby preparing a transparent adhesive having a thickness as specified in Table 2.

### (2) Surface modification treatment of polarizing plate

A polarizing plate ("SEG1425DU" from Nitto Denko Corporation) was subjected to surface modification treatment by a treatment method and at a treatment rate each specified in Table 2.

Plasma treatment was performed using an atmospheric pressure plasma treatment device (AP-T01) available from Sekisui Chemical Co., Ltd. under the condition of an oxygen concentration of 1000 ppm. Corona treatment was performed using a high frequency power source of AGI020 available from Kasuga Electric Works Ltd. and a ceramic electrode (17 mmφ x 410 mm in length) .

Five minutes after the plasma treatment or corona treatment, the contact angle with water on the treated surface of the polarizing plate was measured in conformity with JIS R-3257 using a contact angle measuring device ("CAM200" available from KSV Instruments Ltd.). Table 2 shows the measured contact angle.

### (3) Production of laminate

The adherend used was a glass plate, an ITO-PET film, or a glass plate with touch panel wiring (OGS in Table 2). The glass plate with touch panel wiring (OGS in Table 2) was subjected to surface modification treatment and measurement of the contact angle in the same manner as in (2) Surface modification treatment of polarizing plate.

A transparent adhesive punched using a Thomson blade (50 mm × 50 mm) was sandwiched between a polarizing plate (50 mm × 50 mm) and an adherend (50 mm × 50 mm). Next, they were placed with the adherend facing down, and the upper surface of the polarizing plate was pressed with a SN-rubber roller (size 1, 100 mm in width) so that the adherend and the polarizing plate were bonded to each other. The resulting subject was then heated in an autoclave at 70°C and 0.5 MPa for 30 minutes, thereby preparing a laminate including the adherend (a glass plate, an ITO-PET film, or a glass plate with touch panel wiring (OGS in Table 2)), the transparent adhesive (PVB in Table 2), and the polarizing plate stacked in the stated order. At this time, the absence of bubbles on the adhering surface of the transparent adhesive to the polarizing plate was confirmed. In the case of the glass plate with touch panel wiring (OGS in Table 2), the absence of bubbles on the adhering surface of the transparent adhesive to the OGS was confirmed. The series of operations from the surface modification treatment of the polarizing plate to the production of the laminate was carried out within one hour.

After confirmation of the absence of bubbles on the adhering surface of the transparent adhesive to the polarizing plate, a glass plate was bonded to the rear surface of the polarizing plate with a transparent acrylic adhesive, thereby producing a laminate having a structure shown in Table 2.

### (Comparative Examples 9 to 26)

### (1) Production of acrylic copolymer resin (4)

In a reaction vessel equipped with a stirrer, a reflux condenser, a thermometer, and a nitrogen gas inlet, 65.0 parts by weight of n-butyl acrylate, 26.0 parts by weight of methyl methacrylate, 4.0 parts by weight of ethyl acrylate, 1.0 parts by weight of hydroxyethyl acrylate, 4.0 parts by weight of acrylic acid, and 0.2 parts by weight of 2,2'-azobisisobutyronitrile as a polymerization initiator were dissolved in 100 parts by weight of ethyl acetate. After nitrogen substitution, polymerization was performed at 80°C for eight hours to provide an acrylic copolymer resin (4).

The obtained acrylic copolymer resin (4) was diluted 50-fold with tetrahydrofuran (THF), and the obtained diluted solution was filtered through a filter (material: polytetrafluoroethylene, pore size: 0.2 µm), thereby preparing a measurement sample. The measurement sample was fed to a gel permeation chromatograph (2690 Separations Model from Waters Corporation), and GPC measurement was performed under the conditions of a sample flow rate of 1 ml/min and a column temperature of 40°C to determine the polystyrene equivalent molecular weight of the acrylic copolymer resin (4). Based on the obtained value, the weight average molecular weight (Mw) of the acrylic copolymer resin (4) was determined. The acrylic copolymer resin (4) had a weight average molecular weight of 650,000.

The column used was GPC LF-804 (Showa Denko K.K.) and a detector used was a differential refractometer.

### (2) Production of transparent adhesive

An amount of 100 parts by weight of the obtained acrylic copolymer resin was diluted with ethyl acetate to give an adhesive solution with a resin solids content of 45%. An amount of 100 parts by weight of the adhesive solution was blended with 1 part by weight of an isocyanate crosslinking agent (CORONATE L-45 from Nippon Polyurethane Industry Co., Ltd., solids content of 45%), and the mixture was stirred for 15 minutes. The resulting mixture was applied to a release-treated surface of a release PET film having a thickness of 50 µm in such a manner that the dried adhesive had a thickness of 200 µm, and the adhesive mixture was dried at 80°C for 15 minutes. On the obtained adhesive layer, another release PET film was stacked in such a manner that the release-treated surface was in contact with the adhesive layer, thereby preparing a laminate. The resulting sheet was allowed to stand at 23°C for five days to provide a transparent adhesive (thickness of 200 µm) with the release PET films attached to both surfaces.

### (3) Surface modification treatment of polarizing plate

The polarizing plate was subjected to surface modification treatment in the same manner as in Example 1 by a treatment method and at a treatment rate each specified in Table 4.

### (4) Production of laminate

A laminate including an adherent (a glass plate or an ITO-PET film), a transparent adhesive (acrylic copolymer resin in Table 4), and a polarizing plate stacked in the stated order was produced in the same manner as in Example 1. At this time, the absence of bubbles on the adhering surface of the transparent adhesive to the polarizing plate was confirmed.

After confirmation of the absence of bubbles on the adhering surface of the transparent adhesive to the polarizing plate, a glass plate was bonded to the rear surface of the polarizing plate with a transparent acrylic adhesive, thereby preparing a laminate having a structure specified in Table 4.

### <Evaluation>

The transparent adhesives and laminates obtained in the examples and comparative examples were evaluated for the following parameters. Tables 2 and 4 show the results.

### (1) Formation of bubbles

After the confirmation of the absence of bubbles on the adhering surface of the transparent adhesive to the polarizing plate, the laminate was left in an environment at 85°C and 85%. Five hours later, the appearance of the laminate was visually checked. A state where visible bubbles with a size of 100 µmφ or larger were not present on the adhering surface of the transparent adhesive to the polarizing plate was rated "oo (Excellent)". A state where bubbles with a size of 500 µmφ or larger were not present was rated "o (Good)". A state where bubbles with a size of 500 µmφ or larger were present was rated "× (Poor)".

### (2) Adhesive deposits

The transparent adhesive was punched using a Thomson blade (50 mm × 50 mm) 50 times, and whether or not the transparent adhesive adheres to the Thomson blade (adhesive deposits) was visually checked. A case where adhesive deposits were not found on the Thomson blade was rated "o (Good)", and a case where adhesive deposits were found on the Thomson blade was rated "x (Poor)".

**[Table 1]**

| | | Resin (1) | Resin (2) | Resin (3) |
|---|---|---|---|---|
| Formulation and condition | Ion exchange waster (mL) | 2700 | 2700 | 2700 |
| | Average degree of polymerization | 1800 | 1700 | 3200 |
| | Degree of saponification (mol%) | 99.3 | 99.2 | 88.0 |
| | Weight of polyvinyl alcohol (g) | 300 | 300 | 300 |
| | Concentration of catalyst, 35% by weight hydrochloric acid, after dilution with water (% by weight) | 0.2 | 0.2 | 0.6 |
| | Temperature (°C) | 15 | 15 | 15 |
| | n-BA first addition (g) | 21 | 15 | 14.2 |
| | n-BA second addition (g) | 145 | 130 | 186 |
| | Concentration of 35% by weight hydrochloric acid, after dilution with water (% by weight) | 1.8 | 1.8 | 3.9 |
| | Heating temperature (maturing) (°C) | 50 | 60 | 45 |
| | Heating time (maturing) (hr) | 2 | 2 | 3 |
| Composition | Bu degree (mol%) | 68.3 | 64.7 | 64.0 |
| | Acetyl group content (mol%) | 0.7 | 0.8 | 12.0 |
| | Hydroxy group content (mol%) | 31.0 | 34.5 | 24.0 |

**[Table 2]**

| | Transparent adhesive | | | | Polarizing plate | | | OGS | | | Structure | Evaluation | |
|---|---|---|---|---|---|---|---|---|---|---|---|---|---|
| | Polyvinyl butyral) | Plasticizer | | Film thickness (pm) | Surface modification treatment | | Contact angle (* ) | Surface modification treatment | | Contact angle (* ) | | 85°C85% 5h Formation of bubbles | Adhesive deposits |
| | Type of resin | Type | Parts by weight | | Treatment method | Treatment rate (m/min) | | Treatment method | Treatment rate (m/min) | | | | |
| Example 1 | Resin (1) | 3GO | 35 | 200 | Plasma | 0.1 | 6 | - | - | - | Glass/PVB/polarizing plate/glass | ⊚ | ○ |
| Example 2 | Resin (1) | 3GO | 35 | 200 | Plasma | 0.1 | 6 | - | - | - | ITO-PET/PVB/polarizing plate/glass | ⊚ | ○ |
| Example 3 | Resin (2) | 3GO | 35 | 200 | Plasma | 0.1 | 6 | - | - | - | Glass/PVB/polarizing plate/glass | ⊚ | ○ |
| Example 4 | Resin (2) | 3GO | 35 | 200 | Plasma | 0.1 | 6 | - | - | - | ITO-PET/PVB/polarizing plate/glass | ⊚ | ○ |
| Example 5 | Resin (3) | 3GO | 35 | 200 | Plasma | 0.1 | 6 | - | - | - | Glass/PVB/polarizing plate/glass | ⊚ | ○ |
| Example 6 | Resin (3) | 3GO | 35 | 200 | Plasma | 0.1 | 6 | - | - | - | ITO-PET/PVB/polarizing plate/glass | ⊚ | ○ |
| Example 7 | Resin (1) | 3GO | 35 | 200 | Plasma | 0.15 | 13 | - | - | - | Glass/PVB/polarizing pate/glass | ⊚ | ○ |
| Example 8 | Resin (1) | 3GO | 35 | 200 | Plasma | 0.15 | 13 | - | - | - | ITO-PET/PVB/polarizing plate/glass | ⊚ | ○ |
| Example 9 | Resin (2) | 3GO | 35 | 200 | Plasma | 0.15 | 13 | - | - | - | Glass/PVB/polarizing plate/glass | ⊚ | ○ |
| Example 10 | Resin (2) | 3GO | 35 | 200 | Plasma | 0.15 | 13 | - | - | - | ITO-PET/PVB/polarizing plate/glass | ⊚ | ○ |
| Example 11 | Resin (3) | 3GO | 35 | 200 | Plasma | 0.15 | 13 | - | - | - | Glass/PVB/polarizing plate/glass | ⊚ | ○ |
| Example 12 | Resin (3) | 3GO | 35 | 200 | Plasma | 0.15 | 13 | - | - | - | ITO-PET/PVB/polarizing plate/glass | ⊚ | ○ |
| Example 13 | Resin (1) | 3GO | 35 | 200 | Corona | 03 | 21 | - | - | - | Glass/PVB/polarizing plate/glass | ○ | ○ |
| Example 14 | Resin (1) | 3GO | 35 | 200 | Corona | 0.3 | 21 | - | - | - | ITO-PET/PVB/polarizing plate/glass | ○ | ○ |
| Example 15 | Resin (1) | 3GO | 35 | 200 | Plasma | 0.25 | 25 | - | - | - | Glass/PVB/polarizing plate/glass | ○ | ○ |
| Example 16 | Resin (1) | 3GO | 35 | 200 | Plasma | 0.25 | 25 | - | - | - | ITO-PET/PVB/polarizing plate/glass | ○ | ○ |
| Example 17 | Resin (1) | 3GO | 35 | 200 | Plasma | 1 | 35 | - | - | - | Glass/PVB/polarizing plate/glass | ○ | ○ |
| Example 18 | Resin (1) | 3GO | 35 | 200 | Plasma | 1 | 35 | - | - | - | ITO-PET/PVB/polarizingplate/glass | ○ | ○ |
| Example 19 | Resin (1) | 3GO | 35 | 200 | Plasma | 1.5 | 42 | - | - | - | Glass/PVB/polarizing plate/glass | ○ | ○ |
| Example 20 | Resin (1) | 3GO | 35 | 200 | Plasma | 15 | 42 | - | - | - | ITO-PET/PVB/polarizing plate/glass | ○ | ○ |
| Example 21 | Resin (1) | 3GO | 35 | 200 | Plasma | 0.15 | 13 | Plasma | 0.5 | 7 | OGS/PVB/polarizing plate/glass | ○ | ○ |
| Example 22 | Resin (1) | 3GO | 35 | 200 | Plasma | 0.15 | 13 | Plasma | 1.5 | 15 | OGS/PVB/polarizing plate/glass | ○ | ○ |
| Example 23 | Resin (1) | 3GO | 35 | 200 | Plasma | 0.15 | 13 | Plasma | 2.0 | 28 | OGS/PVB/polarizing plate/glass | ○ | ○ |
| Example 24 | Resin (1) | 3GO | 35 | 200 | Plasma | 1.7 | 48 | - | - | - | Glass/PVB/polarizing plate/glass | ○ | ○ |
| Example 25 | Resin (1) | 3GO | 35 | 200 | Plasma | 1.7 | 48 | - | - | - | ITO-PET/PVB/polarizing plate/glass | ○ | ○ |
| Comparative Example 1 | Resin (1) | 3GO | 35 | 200 | Plasma | 2 | 58 | - | - | - | Glass/PVB/polarizing plate/glass | × | ○ |
| Comparative Example 2 | Resin (1) | 3GO | 35 | 200 | Plasma | 2 | 58 | - | - | - | ITO-PET/PVB/polarizing plate/glass | × | ○ |
| Comparative Example 3 | Resin (1) | 3GO | 35 | 200 | Plasma | 4 | 67 | - | - | - | Glass/PVB/polarizing plate/glass | × | ○ |
| Comparative Example 4 | Resin (1) | 3GO | 35 | 200 | Plasma | 4 | 67 | - | - | - | ITO-PET/PVB/polarizing plate/glass | × | ○ |
| Comparative Example 5 | Resin (1) | 3GO | 35 | 200 | Corona | 3.5 | 77 | - | - | - | Glass/PVB/polarizing plate/glass | × | ○ |
| Comparative Example 6 | Resin (1) | 3GO | 35 | 200 | Corona | 3.5 | 77 | - | - | - | ITO-PET/PVB/polarizing plate/glass | × | ○ |
| Comparative Example 7 | Resin (1) | 3GO | 35 | 200 | Not performed | - | 95 | - | - | - | Glass/PVB/polarizing plate/glass | × | ○ |
| Comparative Example 8 | Resin (1) | 3GO | 35 | 200 | Not perfomed | - | 95 | - | - | - | ITO-PET/PVB/polarizing plate/glass | × | ○ |

**[Table 3]**

| | | | Resin (4) |
|---|---|---|---|
| Composition of acrylic copolymer resin | Monomer composition (% by weight) | n-Butyl acrylate | 65.0 |
| | | Methyl methacrylate | 26.0 |
| | | Ethyl acrylate | 4.0 |
| | | Hydroxyethyl acrylate | 1.0 |
| | | Acrylic acid | 4.0 |
| | Weight average molecular weight (Mw/10.000) | | 65.0 |
| | Isocyanate crosslinking agent | CORONATE L-45 from Nippon | 1.0 |
| | | Polyurethane Industry Co., Ltd. | |
| | | Solids content of 45% | |

**[Table 4]**

| | Transperent adhesive | | Polarizing plate | | | Structure | Evaluation | |
|---|---|---|---|---|---|---|---|---|
| | Acrylla copolymer resin | Film thickness (µm) | Surface modification treatment | | Contact angle (* ) | | 86°85% 5h Formation of bubbles | Adhesive deposits |
| | Type of resin | | Treatment method | Treatment rate (m/min) | | | | |
| Comparative Example 9 | Resin (4) | 200 | Plasma | 0.15 | 13 | Glass/sorylic copolymer resin/polarizing plate/glass | × | × |
| Comparative Example 10 | Resin (4) | 200 | Plasma | 0.15 | 13 | ITO-PET/acrylic copolymer resin/polarizing plate/glass | × | × |
| Comparative Example 11 | Resin (4) | 200 | Corona | 0.3 | 21 | Glass/acrylic copolymer resin/polarizing plate/glass | × | × |
| Comparative Example 12 | Resin (4) | 200 | Corona | 0.3 | 21 | ITO-PET/acrylic copolymer resin/polarizing plate/glass | × | × |
| Comparative Example 13 | Resin (4) | 200 | Plasma | 0.26 | 25 | Glass/acrylic copolymer resin/polarizing plate/glass | × | × |
| Comparative Example 11 | Resin (4) | 200 | Plasma | 0.26 | 26 | ITO-PET/acrylic copolymer resin/polarizing plate/glass | × | × |
| Comparative Example 16 | Resin (4) | 200 | Plasma | 1 | 36 | Glass/acrylic copolymer resin/polarizing plate/glass | × | × |
| Comparative Example 16 | Resin (4) | 200 | Plasma | 1 | 36 | ITO-PET/acrilyc copolymer resin/polarizing plate/glass | × | × |
| Comparative Example 17 | Resin (4) | 200 | Plasma | 1.5 | 42 | Glass/acrylic copolymer resin/polarizing plate/glass | × | × |
| Comparative Example 18 | Resin (4) | 200 | Plasma | 1.5 | 42 | ITO-PET/acrylic copolymer resin/polarizing plate/glass | × | × |
| Comparative Example 19 | Resin (4) | 200 | Plasma | 2 | 58 | Glass/acrylic copolymer resin/polarizing plate/glass | × | × |
| Comparative Example 20 | Resin (4) | 200 | Plasma | 2 | 58 | ITO-PET/acrylic copolymer resin/polarizing plate/glass | × | × |
| Comparative Example 21 | Resin (4) | 200 | Plasma | 4 | 67 | Glass/acrilyc copolymer resin/polarizing plate/glass | × | × |
| Comparative Example 22 | Resin (4) | 200 | Plasma | 4 | 67 | ITO-PET/acrylic copolymer resin/polarizing plate/glass | × | × |
| Comparative Example 23 | Resin (4) | 200 | Corona | 3.5 | 77 | Glass/acrylic copolymer resin/polarizing plate/glass | × | × |
| Comparative Example 24 | Resin (4) | 200 | Corona | 3.5 | 77 | ITO-PET/acrylic copolymer resin/polarizing plate/glass | × | × |
| Comparative Example 25 | Resin (4) | 200 | Not performed | - | 95 | Glass/acrylic copolymer resin/polarizing plate/glass | × | × |
| Comparative Example 26 | Resin (4) | 200 | Not performed | - | 95 | ITO-PET/acrylic copolymer resin/polarizing plate/glass | × | × |

### INDUSTRIAL APPLICABILITY

The present invention can provide a polarizing plate with a transparent adhesive which is incorporated in a touch panel used in a personal digital assistant or the like, which is less likely to cause adhesive deposits on a punching blade during a punching process, and which is also less likely to have bubbles formed on an adhering surface of the transparent adhesive to the polarizing plate even with exposure to high temperature and high humidity. The present invention also can provide a touch panel incorporating the polarizing plate with a transparent adhesive.

### REFERENCE SIGNS LIST

1: Transparent adhesive
2: Polarizing plate
2a: Polyvinyl alcohol layer
2b: Protection film
2c: Hard coat layer
2x: Surface to which transparent adhesive adheres of polarizing plate
3: Polarizing plate with transparent adhesive
4: Glass plate with touch panel wiring
4a: Glass plate
4b: Touch panel wiring
4c: Hard coat layer
5: Liquid crystal display module

## Claims

1. A polarizing plate with a transparent adhesive, comprising:
a polarizing plate; and
a transparent adhesive containing a plasticized polyvinyl acetal resin and adhering to the polarizing plate,
the polarizing plate having a contact angle with water in conformity with JIS R-3257 of less than 50° on a surface to which the transparent adhesive adheres.

2. The polarizing plate with a transparent adhesive according to claim 1,
wherein the surface to which the transparent adhesive adheres is preliminarily subjected to surface modification treatment.

3. The polarizing plate with a transparent adhesive according to claim 2,
wherein the surface modification treatment is plasma treatment or corona treatment.

4. The polarizing plate with a transparent adhesive according to claim 1, 2, or 3,
wherein the plasticized polyvinyl acetal resin contains a polyvinyl acetal and a plasticizer, and the polyvinyl acetal is polyvinyl butyral.

5. A touch panel comprising:
at least one adherend selected from the group consisting of a glass plate, a resin plate, a resin film, a glass plate with touch panel wiring, and a resin film with touch panel wiring; and
the polarizing plate with a transparent adhesive according to claim 1, 2, 3, or 4,
the adherend and the polarizing plate being stacked on each other through the transparent adhesive.
